Europäisches Patentamt

European Patent Office

Office européen des brevets

(11) Publication number: 0 332 288
A2

## (12) EUROPEAN PATENT APPLICATION

(21) Application number: 89301002.5

(22) Date of filing: 02.02.89

(51) Int. Cl.4: B60C 7/10

(30) Priority: 10.03.88 GB 8805729

(43) Date of publication of application:
13.09.89 Bulletin 89/37

(84) Designated Contracting States:
BE DE ES FR GB IT NL SE

(71) Applicant: Watts Industrial Tyres Limited
Church Road
Lydney Gloucestershire GL15 5EN(GB)

(72) Inventor: White, Lewis William
Treetops Lydney Road
Yorkley Gloucestershire(GB)

(74) Representative: Higgins, Michael Roger et al
A.R. Davies & Co. 27, Imperial Square
Cheltenham Glos. GL50 1RQ(GB)

(54) Tyre construction.

(57) A tyre construction comprises an outer annular casing 10 of resilient material having an outer circumferential tread portion 11 and two spaced side walls 12 extending inwardly from the tread portion and terminating in respective bead portions 13 which are arranged to engage the rim of a wheel hub. An annular base member 15 of resilient material extends between, and is bonded to, the side walls in the vicinity of the bead portions so as to define a closed annular space between the outer casing and the base member. An inner core 22 of softer resilient material fills the annular space. The annular base member 15 is formed at opposite outer edges thereof with peripheral flange portions 18 which overlie and are bonded to the respective side walls of the outer casing. The pressure exerted on the flange portions by the solid inner core serves to press the flange portions against the side walls of the outer casing.

# Tyre Construction

The invention relates to a tyre construction of the kind comprising an outer annular casing of resilient material filled with an inner core of softer resilient material. Such tyres are often referred to as solid or puncture-proof tyres, since they do not rely on inflation to form a cushion of air under pressure to maintain the tyre shape.

Many different tyre constructions of this basic kind have been proposed, and many different materials have been used for the core, with greater or lesser degrees of success. A polymer filled resilient material appears to provide satisfactory results for tyres which are not intended to run at high speeds. Such tyres are therefore more suitable for the off-the-road vehicles, such as earth moving equipment, factory trucks, and light machinery, some of which are of substantial size and therefore require tyres of large circumference and width.

Many methods have also been proposed for the construction of such tyres. For example, a special annular outer casing may be found which has an enclosed cross-section so as to define a tubular annular enclosure which is then filled with core material under pressure. In such construction the tyre can be expensive to produce in that it requires a special mould or moulds for the manufacture of the outer casing. Also, the advantages of conventional tyres in terms of strength, security on the wheel rim, resilience and performance may be lost or reduced in favour of other characteristics which may be dictated by manufacturing considerations.

It is an object of the invention to provide an improved tyre construction in which the advantages of conventional tyres may be retained in a tyre which also has puncture-proof characteristics.

According to the invention there is provided a tyre construction comprising an outer annular casing of resilient material having an outer circumferential tread portion and two spaced side walls extending inwardly from the tread portion and terminating in respective bead portions which are arranged, in use, to engage in the rim of a wheel hub, an annular base member of resilient material which extends between, and is bonded to, the side walls in the vicinity of the bead portions so as to define a closed annular space between the outer casing and the base member, and an inner core of softer resilient material filling said annular space, the annular base member being formed at the opposite outer edges thereof with peripheral flange portions which overlie and are bonded to the respective side walls of the outer casing, the pressure exerted on said flange portions by said solid inner core serving to press the flange portion against the side walls of the outer casing.

The annular base member may be formed from resilient material of similar resilience or composition to the material of the outer casing.

Preferably circumferential reinforcing elements, such as steel wires, are embedded in the annular base member.

The peripheral flange portions are preferably integral with the base member, and are tapered, as viewed in cross-section, as they extend away from the base member.

A central portion of the outer peripheral surface of the base member, between the flange portions, may project radially outwardly beyond the inner ends of the flange portions so as to define peripheral depressions between the central portion and the flange portions, into which depressions the material of the inner core extends.

The invention includes within its scope a method of manufacturing a tyre according to the invention, comprising pre-forming said annular base member, fitting the base member between the side walls of the outer casing to define said closed annular space, injecting into the closed annular space a curable material which, when cured, forms a resilient material softer than the resilient material of the casing, and curing said curable material.

The method may include the step of bonding the base member and the flange portions thereof to the inner surfaces of the spaced side walls respectively of the outer casing. Said bonding may be effected by applying a curable adhesive between the engaging surfaces of the base member, flange portions and side walls of the outer casing, and then curing said adhesive. The curing of the bonding adhesive may be effected simultaneously with the curing of the core material.

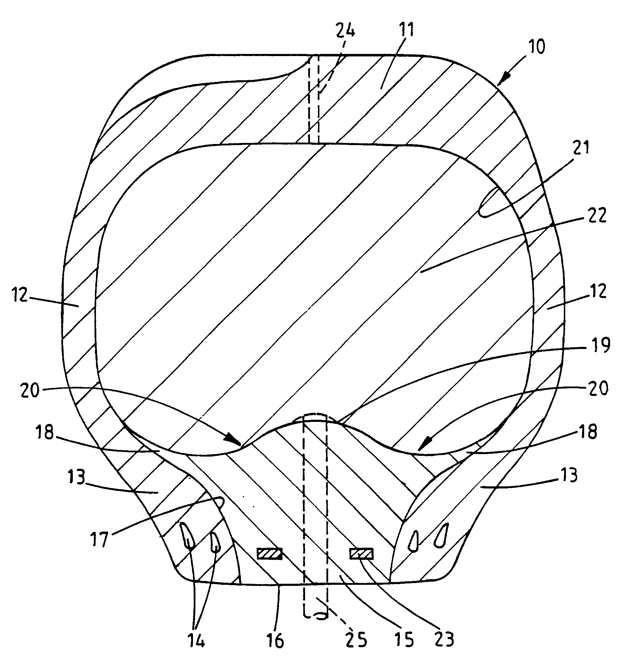

The following is a more detailed description of a preferred embodiment of the invention, reference being made to the accompanying drawing which is a cross-section through a tyre constructed in accordance with the present invention.

The tyre comprises an outer annular casing 10 having an outer circumferential tread portion 11 and, integral therewith, two spaced side walls 12 extending inwardly from the tread portion and terminating in respective bead portions 13. The bead portions 13 are arranged, in use, to engage in the rim of a wheel hub (not shown). The bead portions 13 are reinforced by circumferential reinforcing wires 14 in conventional manner.

It will be seen that the outer casing 10 has generally the cross-sectional configuration of a conventional pneumatic tyre of the kind which is normally inflated with air under pressure, either directly or by means of a thin inflatable inner tube contained within the casing.

The casing 10 is produced from conventional materials such as rubber or rubber substitute materials, or combinations of these, and may contain layers of flexible fabric, metal, or other materials in the manner of conventional tyre casings. Although the casing 10 may be specially manufactured according to the particular requirements of the tyre according to the invention, the invention includes within its scope arrangements in which the casing is a conventional tyre designed and manufactured for use in the normal manner, that is to say by being inflated.

Located between the bead portions 13 of the side walls 12 is an annular base member 15. The base member 15 has a substantially flat inner peripheral surface 16 and concavely curved opposite side faces 17 shaped to fit with the corresponding convexly curved surfaces on the bead portions of the outer casing.

The annular base member 15 is formed at the opposite outer edges thereof with peripheral flange portions 18 which are tapered and which overlie the respective side walls 12 of the outer casing. The central portion 19 of the base member 15, between the flanges 18, projects radially outwardly beyond the inner ends of the flanges so as to define peripheral depressions 20 between the central portion 19 and the flanges 18.

The opposite sides of the base member 15, and the surfaces of the flanges 18, are bonded to the bead portions 13 of the side walls 12 of the outer casing so as to define a closed annular space 21 between the outer casing and the base member. This closed annular space is filled with a body 22 of resilient core material which is softer than the resilient material of the casing. The body of resilient material 22 is under a pressure comparable with the normal internal pressure of a pneumatic tyre of similar size and configuration to the outer casing. A suitable material may be a polymer filled resilient material.

The annular member 15, which may be formed from rubber, synthetic rubber or other resilient material similar to the material of the outer casing 10, is reinforced by peripheral steel reinforcing strips 23 embedded therein.

The tyre in its finished form is fitted to a wheel hub which may be of the kind referred to as a split rim, comprising two separable flanges bolted together so that the tyre may be fitted to the rim without the necessity of stretching the tyre radially.

The tyre may be conveniently manufactured by means of the following steps. Firstly, the outer casing 10 is produced. As previously mentioned, the casing may be specially moulded or may be a conventional tyre casing. In either case, however, the inner surfaces of the side walls and bead portions must be accurately shaped where they are to be bonded to the base member 15. The outer tread portion 11 of the tyre is formed, at one point around its periphery, with an air escape hole 24. This may conveniently be drilled through the tread portion after manufacture of the casing.

Next, the pre-moulded annular base member 15 is introduced into the gap between the bead portions 13 of the casing and is located with its outer concave surfaces 17, and flanges 18, lying accurately against the convex interior surfaces of the casing. A curable bonding agent is applied to the engaging surfaces of the base member 15 and casing 10 before the base member is introduced into the casing.

The base member 15 has an inlet tube 25 passing through it as indicated diagrammatically in the drawing. Both the inlet tube 25 and air outlet hole 24 are shown in the drawing, but in practice the outlet is preferably at a location diametrically opposed to the location of the inlet tube.

A nozzle is then fitted to the inlet tube 24 and the curable core material is injected under pressure into the space 21 through the inlet tube 24. The curable material is in liquid form and is injected into the interior space so as to fill it completely. The outlet hole 24 is closed off as soon as the liquid core material begins to issue therefore, indicating that the interior of the casing is filled. Sufficient material is injected to ensure that the internal pressure within the casing is at the required level. As previously mentioned, the pressure may be of the same order as the necessary pneumatic pressure within a similar conventional type.

A suitable material for the core material is a soft polyurethane mixture in the ratio of 1:1 by volume. However, other ratios can be used to give, when cured, a hardness variation between 26 Shore 'A' to 45 Shore 'A' with an elongation of 380 degrees.

The inlet tube 25 is then closed and the tyre is subjected to the temperature conditions necessary to cure and solidify the material, such conditions also serving simultaneously to cure the bonding adhesive between the base member 15 and the inner walls of the casing.

An important feature of the invention is the provision of the flanges 18 on the base member 15. The purpose of these flanges is, firstly, to provide an effective seal between the sides of the base member 15 and the internal walls of the casing 10 as the core material is introduced under pressure. The pressure in the core material 22 presses the flanges 18 firmly against the side walls of the casing and this prevents the escape of the liquid core material under pressure between the sides of the base member 15 and the walls of the casing. The pressure applied to the flanges 18 by the pressurised core material 22 also ensures that an effective bond is made between the flanges and the side walls of the casing.

Furthermore, when the tyre is in use, the pressure in the core material 22 continues to urge the flanges 18 against the side walls of the casing, no matter how the casing flexes under the loads applied to the tyre in use. This constant pressing of the flanges 18 against the side walls of the casing reduces the risk of the tyre structure failing due to breaking down of the bond between the annular member 15 and the casing.

After curing of the core material, the inlet tube 25 may be removed or it may be retained in the tyre structure and extend through the hole in the wheel rim which is normally provided to receive an air inlet valve.

The tyre construction described, with the reinforced base member 15 firmly bonded to the outer casing 12, gives greater stability under load and speed than arrangements used hitherto. By using the specialised developed inner core material 22 of the type described there is less build up of heat under load and speed. At the same time the construction gives the same advantages as a pneumatic tyre without the risk of punctures.

## Claims

1. A tyre construction comprising an outer annular casing (10) of resilient material having an outer circumferential tread portion (11) and two spaced side walls (12) extending inwardly from the tread portion and terminating in respective bead portions (13) which are arranged, in use, to engage in the rim of a wheel hub, an annular base member (15) of resilient material which extends between, and is bonded to, the side walls in the vicinity of the bead portions so as to define a closed annular space between the outer casing and the base member, and an inner core (22) of softer resilient material filling said annular space, the annular base member being formed at the opposite outer edges thereof with peripheral flange portions (18) which overlie and are bonded to the respective side walls of the outer casing, the pressure exerted on said flange portions by said inner core serving to press the flange portions against the side walls of the outer casing.

2. A tyre construction as claimed in Claim 1, wherein the annular base member (15) is formed from resilient material of similar resilience or composition to the material of the outer casing (10).

3. A tyre construction as claimed in Claim 1 or Claim 2, wherein circumferential reinforcing elements (23) are embedded in the annular base member (15).

4. A tyre construction as claimed in Claim 3, wherein the reinforcing elements are steel wires (23).

5. A tyre construction as claimed in any one of the preceding claims, wherein the peripheral flange portions (18) are integral with the base member, and are tapered, as viewed in cross-section, as they extend away from the base member.

6. A tyre construction as claimed in any one of the preceding claims, wherein a central portion (19) of the outer peripheral surface of the base member, between the flange portions, projects radially outwardly beyond the inner ends of the flange portions so as to define peripheral depressions (20) between the central portion and the flange portions, into which depressions the material of the inner core extends.

7. A method of manufacturing a tyre according to any one of the preceding claims, comprising preforming said annular base member (15), fitting the base member between the side walls (12) of the outer casing (10) to define said closed annular space, injecting into the closed annular space a curable material which, when cured, forms a resilient material (22) softer than the resilient material of the casing, and curing said curable material.

8. A method as claimed in Claim 7, including the step of bonding the base member (15) and the flange portions (18) thereof to the inner surfaces of the spaced side walls (12) respectively of the outer casing.

9. A method as claimed in Claim 8, wherein said bonding is effected by applying a curable adhesive between the engaging surfaces of the base member, flange portions and side walls of the outer casing, and then curing said adhesive.

10. A method as claimed in Claim 9, wherein the curing of the bonding adhesive is effected simultaneously with the curing of the core material.